# EUROPEAN PATENT SPECIFICATION

(11) **EP 3 414 185 B1**
(45) Date of publication and mention of the grant of the patent: **06.11.2019**
(21) Application number: 17703102.8
(22) Date of filing: 01.02.2017
(51) Int. Cl.: B65D 85/804

(54) **PACK, PREPARATION MACHINE, SYSTEM AND METHOD FOR PREPARING FOOD OR BEVERAGE PRODUCTS, AS WELL AS USE OF A PACK**
PACK, ZUBEREITUNGSMACHINE, SYSTEM UND VERFAHREN ZUR ZUBEREITUNG VON LEBENSMITTEL- ODER GETRÄNKEPRODUKTEN, SOWIE VERWENDUNG EINES PACKS
EMBALLAGE, MACHINE, SYSTÈME ET MÉTHODE POUR LA PRÉPARATION DE PRODUITS ALIMENTAIRES OU BOISSONS, AINSI QU'UTILISATION D'UN EMBALLAGE

(30) Priority: 11.02.2016 EP 16155320
(43) Date of publication of application: 19.12.2018
(73) Proprietor: Société des Produits Nestlé S.A., 1800 Vevey (CH)
(72) Inventor: PELLEGRINI, Stéphane, 25160 Montperreux (FR); JARISCH, Christian, 1095 Lutry (CH); NORDQVIST, David, 1007 Lausanne (CH)
(74) Representative: Navarro Fernández, Maria Isabel
(86) International application number: PCT/EP2017/052095
(87) International publication number: WO 2017/137286

(56) References cited:
- WO-A1-99/05044
- WO-A1-2014/125123
- WO-A1-2015/132320
- WO-A1-2016/016072

## Description

### Field of the invention

The present invention relates to a pack for preparing food or beverage products, in particular it relates to an insert in such a pack, the pack being configured by the insert together with a container, such that a fluid is introduced in the container through the insert in order to prepare the corresponding food or beverage product.

### Background of the invention

Preparing beverages by introducing a capsule containing a food or beverage ingredient, such as ground coffee or instant coffee, in a beverage dispensing machine and injecting water into the capsule is known in the state of the art: the beverage or food ingredient is typically extracted or dissolved into water to form the beverage or the desired final product, which flows out of the capsule through a suitable outlet.

As such, different capsules have been developed in the past, these capsules being at least differentiated by the nature of the capsule body used for storing the food or the beverage ingredient. Whereas most of the capsules are made of a rigid body or semi-rigid body, typically made though injection moulding or thermoforming, flexible types of packs can be made out of foil materials. Flexible packs have generally the advantage to semi-rigid and rigid capsules that less amount of material is used to pack the product leading to overall less production cost, to lower life cycle impact shown in several life-cycle assessments and to advantages on the part of the user, who will need less available space for storing these packs, as they are more compact.

For example, WO 99/05044 describes a flexible beverage-producing sachet comprising a beverage ingredient in a volume formed by bonding two laminates at their edges, having a base seam into which a conduit of rigid plastics is bonded. An inlet nozzle is provided at the top of the resulting sachet for introducing water that is mixed with the beverage or food ingredient inside the inner volume of the sachet, the beverage produced being then evacuated through a beverage outlet arranged at the bottom of the pack, where closing means are provided, such that the closing means are adapted to open under pressure when pressurized water is introduced into the sachet, allowing the beverage to evacuate through the beverage outlet. However, this configuration presents important drawbacks for the consumer: the opening of the closing means is obtained by increase of pressure inside the sachet. Yet this pressure increase is not recommended for the preparation of some beverages because it creates bubbles at the surface of the beverage, for example this would not be desired for the preparation of tea. Besides, there exists the risk for the user that the packages may not rupture at the desired pressure, and that they would finally open up in an uncontrollable explosion. For this reason the apparatus where the sachet is processed needs to comprise means for totally enclosing the sachet in the machine during beverage preparation in order to avoid risk of damages for the consumer.

Some other flexible sachets are also known in the state of the art, for example as per WO 2011/024103, disclosing a flexible pouch or sachet for preparing a beverage such as coffee, comprising a space where a concentrated dose of the product is stored. The pouch comprises also a rigid part on one of the sides of the pouch, provided with an inlet through which water is inserted into the pouch, a tube element conveying the water towards the opposite part of the pouch, so that the mixing of the water and the ingredient is made, and an outlet through which the product is dispensed. During the preparation of the beverage the beverage outlet is positioned at the top of the pouch. Water is introduced through the inlet and through the tube element until it fills the pouch and overflows through the beverage outlet positioned at the top of the pouch too. Such a pouch is conceived for preparing a beverage by extraction of roast and ground coffee but not by dissolution of instant coffee or other soluble materials. For this reason the pouch comprises a filter at the outlet to prevent insoluble particles from being dispensed with the beverage. An inconvenient of such a pouch is that at the end of the preparation of the beverage and the introduction of water, beverage remains in the pouch which is an issue for the user who cannot properly remove the pouch from the beverage production machine.

In the known flexible pouches or sachets described of the known prior art, dissolution starts immediately upon the introduction of the mixing fluid inside the sachet, as the outlet is open and there are no means controlling its opening or closure. Therefore, the dissolution has not been prepared and properly done and the product is already being delivered. It would be then desirable to provide a sachet where the dispensing only starts once the dissolution has been properly prepared. Therefore, it is an object of the present invention to provide a solution to the above-described needs, as it will be further explained. The invention also aims at other objects and particularly at the solution of other problems as will appear in the rest of the present description.

### Summary of the invention

According to a first aspect, the invention refers to a pack according to claim 1.

Preferably, the pack comprises at least primary and secondary inlet areas piercable to access corresponding primary and secondary inlets. The primary and secondary inlets typically communicate with the inner volume of the container by respective primary and secondary jet inlets, preferably arranged at about 90° with respect to the primary and secondary inlets.

Preferably, the primary and secondary inlets are reversibly arranged in the pack so that they can be accessed frontally or through their opposed rear parts. Typically, the primary and secondary inlet areas are arranged symmetrically with respect to a central vertical axis dividing the pack in two identical parts.

According to another embodiment, the primary and secondary inlet areas are arranged in the insert asymmetrically, so that optimal turbulences are created inside the container.

Typically, in the pack of the invention, the at least one flexible sheet is arranged overwrapping the insert in its entirety except for the part of the insert in direct communication with the inner volume of the container.

Preferably, the pack further comprises an outlet delivery area wrapped with flexible sheet which can be cut in order to give access to the dispensing outlet.

The pack of the invention can be configured as a capsule, as a sachet, as a pouch or the like.

Preferably, the pack further comprises identification means comprising information on process parameters to produce the food or beverage product, the process parameters being at least one or a combination of the following: temperature of the aqueous fluid injected, pressure of the gaseous fluid injected, total volume of gas and water injected, processing time, etc.

According to a second aspect, the invention relates to a preparation machine according to claim 11.

Typically, the preparation machine further comprises piercing and injecting means configured to pierce and inject a fluid through the primary and secondary inlet areas either simultaneously or discontinuously. The injecting means can comprise different fluid channels able to inject simultaneously or discontinuously an aqueous and/or a gaseous fluid. The fluid channels can be managed independently regarding pressure and/or temperature and/or fluid flow.

Also preferably, the preparation machine of the invention further comprises cutting means configured to open an area in the pack giving access to a dispensing outlet through which the product is delivered.

According to another aspect, the invention relates to a system according to claim 16.

According to yet another aspect, the invention relates to the use of a pack according to claim 17.

According to still another aspect, the invention refers to a method according to claim 18.

Typically, the injection pressure of the aqueous fluid and of the gaseous fluid are different.

In the method of the invention, preferably the pressure and/or temperature and/or flow of the aqueous and gaseous fluid injection depend on the type of ingredient or ingredients in the pack.

### Brief description of the drawings

Further features, advantages and objects of the present invention will become apparent for a skilled person when reading the following detailed description of non-limiting embodiments of the present invention, when taken in conjunction with the appended drawings, in which:
Figs. 1a-d show different views of an insert used in a pack for preparing food or beverage products according to the present invention.
Fig. 2 shows a general view of a pack comprising an insert for preparing food or beverage products according to the present invention.
Fig. 3 shows a general view of a machine used together with a pack for preparing a food or beverage product according to the present invention.

### Detailed description of exemplary embodiments

According to a first aspect, the invention relates to *an insert 10 for being used with a pack for preparing* a *food or beverage product.* The pack 100 comprises the insert 10 and a container 20: the container 20 comprises at least one ingredient for the preparation of the food or beverage product. The preparation of the product is made by introducing a fluid through the insert 10, typically water and/or air, so the ingredient is mixed and/or diluted and/or reconstituted before being delivered through a dispensing outlet, which is also arranged in the insert 10.

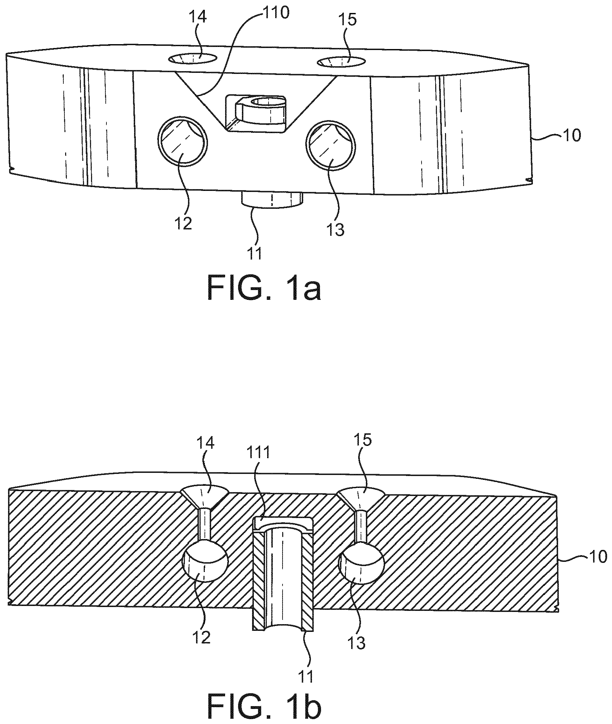

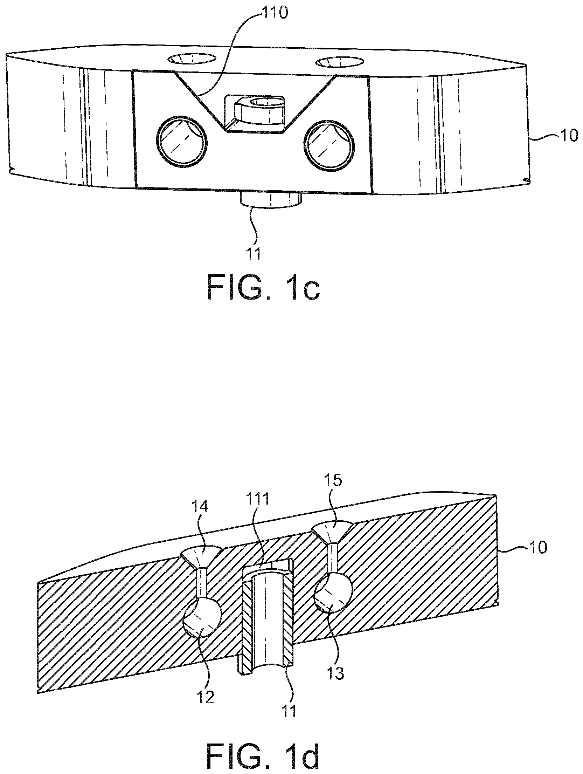

As shown in Figure 1a, the insert 10 comprises a dispensing outlet 11, through which the product prepared is delivered, and typically a primary inlet 12 and a secondary inlet 13 (the insert 10 can also comprise only one of these two inlets) through which injecting means 200 (not shown) inject a fluid through the primary and/or secondary inlet 12 and/or 13. Typically, as it will be further explained, the injecting means 200 are further piercing and injecting means: they are also configured to pierce an outer cover (typically, a flexible sheet) covering the external part of the inlets 12, 13. This way, the means 200 will first pierce the external sheet and then inject a fluid through corresponding inlets 12, 13. As represented in Figure 1a, the primary inlet 12 and the secondary inlet 13 are communicated with the inner volume of the container 20 by means of primary and secondary jet inlets 14 and 15, respectively. Typically, the fluid injected through the inlets 12, 13 is diverted an angle of approximately 90° into the primary and secondary jet inlets 14 and 15, i.e. the primary and secondary inlets form an angle of approximately 90° with respect to the primary and secondary jet inlets. However, any other angle is also valid and comprised within the scope of the present invention.

Preferably, in order to make the pack 100 reversible, the inlets 12, 13 can be accessed frontally or in their rear side: this can be done either by making them being through holes or by being blind holes, still able to be accessed from both sides of the pack, frontal and rear side. Preferably, the insert 10 is identical on both its front and rear sides.

According to the invention, different possibilities are allowed for introduction of a fluid inside the volume of the container: when only one inlet is present, you can inject both water and air through this inlet (this should be done by injecting means 200 comprising inner channels able to inject the two fluids), either simultaneously or intermittently. Preferably, water is injected continuously and air is injected at certain pulses (intermittent periods) in order to allow creating strong turbulences inside the container helping to achieve a good dissolution of the ingredient inside. When two inlets 12 and 13 are present in the insert 10, then water can be for example introduced through one of them and air (usually also intermittently, at certain pulses) can be introduced through the other inlet, or both water can be continuously introduced through the two inlets and, on one or on both, intermittent pulses of air can further be injected in order to help creating turbulences and to achieve good dissolutions. Furthermore, this good dissolution and strong turbulences lead to achieving a good foaming (if desired) of the product delivered in cup.

According to the present invention the food or beverage ingredient of the container can be comprised within the list of: soups, fruit juices, vegetable juices, bouillons, coffee, chocolate, tea, milk or creamer, smoothies, purees, coulis, creams or a combination thereof. The food or beverage ingredient can be a soluble food or beverage ingredient. Preferably the food or beverage ingredient is a soluble food or beverage ingredient selected in the list of:
- instant coffee powder, milk powder, cream powder, instant tea powder, cocoa powder, soup powder, fruit powder or mixture of said powders,
- a coffee concentrate, a milk concentrate, a syrup, a fruit or vegetable concentrate, a tea concentrate, a fruit or vegetable puree.

The powders can be agglomerated or sintered. The powders or liquid concentrates can be mixed with solid pieces for example for preparing soups with solid or encapsulated pieces. The food or beverage ingredient can also be an infusable food or beverage ingredient like a roast and ground coffee or tea leaves. In that embodiment water extracts the infusable ingredient.

In the present invention fluid covers either any aqueous diluent that can be mixed with a soluble beverage ingredient to prepare a beverage, like water, carbonated water, milk, etc. (preferably, water is the preferred aqueous diluent) or any gaseous fluid such as for example air. When referring to aqueous fluid, water is the preferred fluid; when referring to gaseous fluid, air is the preferred fluid.

The pack 100 of the invention can be configured having any possible shape, such as a pouch (flexible, for example), a capsule, or any other possible container shape.

In contrast with the systems in the known prior art, where the fluid is introduced from top to bottom, the pack of the invention works injecting water and preferably air from bottom to top at high velocity, which allows optimal turbulences created inside the container and therefore optimal dissolution of the product inside. The air through the injecting means 200 is not introduced at high pressure: the pressure is preferably comprised between 0.1 and 1.5 bar, more preferably between 0.3 and 0.5 bar. According to the invention, optimal turbulences and dissolution are obtained by high velocity, not by high pressure.

Preferably, the aqueous fluid (water) is injected at a pressure higher than 2 bar, more preferably higher than 3 bar, preferably comprised between 2 and 10 bar, more preferably of around 7 bar. The inlets 12, 13 are configured in such a way that the high pressure fluid injected through them by the injecting means 200 is converted into a high velocity jet, which is driven into the container 20. Typically, the diameter of these inlets is comprised between 1 mm and 4 mm, more preferably between 1.5 mm and 3 mm and comprises a yieldably cover over it which can be pierced by the injecting means 200. The primary and secondary jet inlets 14, 15 communicating with the inside volume of the container have a diameter of at most 1 mm, preferably of at least 0.2 mm, preferably comprised between 0.2 mm and 1 mm, preferably between 0.3 and 0.6 mm. With such a configuration, the high pressure fluid injected by the injecting means 200 is conveyed internally towards the jet inlets, from which it is converted into a high velocity jet of fluid injected inside the container. Typically, this jet of fluid provided in the container has a velocity of at least about 20 m/s, preferably of at least 30 m/s.

The fluid jet and the turbulences created inside the container avoid that the food or beverage product flows through the dispensing outlet 11 too rapidly: therefore, the time of agitation of the ingredient together with the fluid inside the container volume is increased.

As described, the inlets in the insert 10 are configured for introducing the fluid under the form of a jet in the inner volume of the container. By jet it is understood a stream of liquid or fluid into the inner volume of the container quickly and with force. Such a configuration is preferably obtained by placing a constriction (that of the jet inlets) in the fluid path in the fluid inlet to reduce the size of the section of the fluid inlet. Due to the small surface of the jet inlet through which the fluid goes into the inner volume of the container, the pressurized fluid creates a jet in the inner volume of the container.

The small surface of the jet inlet presents the advantage of avoiding any back flow of fluid from the inner volume of the container into the fluid inlet. For the same fluid to be provided through the fluid inlet, the surface of the jet inlet can vary according to the nature of the food and beverage ingredient inside the container which is to be mixed with the fluid. In particular when the ingredient is difficult to dissolve a smaller jet inlet creates a jet with a higher velocity which improves agitation and dissolution of this ingredient in the container.

The arrangement of the fluid inlets 12, 13 in the insert 10 is made such that the turbulence created in the inner volume of the container is optimal. It has also been found that, when the fluid inlets are not arranged symmetrically in the insert 10, the turbulences created can be better and allow even a better dissolution of the ingredient inside, reducing dead zones inside the volume, allowing less preparation time and providing better foaming.

The insert 10 comprises a dispensing outlet 11, through which the beverage or final product is dispensed. The dispensing outlet 11 is preferably configured so that it delivers the product as a free flow, meaning that the product can flow from the dispensing outlet 11 by simple gravity fall. According to a preferred embodiment of the invention, the dispensing outlet 11 comprises an opening at the bottom of the insert 10, having a transverse section with a surface area equivalent to the surface of a circular surface of diameter of at least 1 mm, preferably at most 6 mm, even more preferably comprised between 1.5 and 3 mm. The dispensing outlet 11 is typically configured as a straight tube oriented essentially vertically inside the insert 10, comprising at its end an opening. An advantage of the dispensing outlet 11 of the present invention is that there is no need to implement a particular connection with the machine when a beverage is produced in order to direct the flow of the beverage delivered: the beverage can flow from the dispensing outlet 11 directly into a drinking cup.

The insert 10 is preferably rigid and is made of a rigid plastic material, preferably by injection moulding. Typically, this plastic material can be selected from the following: polypropylene, polyethylene, polyethylene terephthalate and polylactic acid. Also according to a less preferred embodiment the insert 10 can be made of a metal like aluminium or tin-plate.

Different sizes of the pack 100 can be used in a same machine adapted to store different quantities of ingredients: typically, it is the configuration of the insert 10 as to external shape and piercing requirements of the fluid inlets what determines the machine to use; however, the size of the containers, when extending vertically, does not determine or limit the machine. As a consequence, it becomes possible to produce different products, such as for example a cup of espresso coffee or a bowl of soup, with the same machine. The external design of the insert 10 will remain unchanged independently on the product targeted; however, the internal design of the insert 10, in particular as to the diameter of the jet inlet will differ as a function of the ingredient to be processed and therefore as a function of the food or beverage product targeted. It is therefore the interface of the insert with the machine what needs to remain unchanged so the same machine can be used for different sachets. Also, other parameters such as the flow rate of fluid injected and/or the temperature of the fluid injected and/or the total volume of fluid injected, will be modified as a function of the ingredient to be processed and therefore as a function of the food or beverage product targeted.

The pack 100 can also comprise an excrescence enabling the handling of the pack by the user or consumer: this has not been shown in the Figures attached, though.

According to the invention, either the insert 10 and/or the container 20 preferably comprise identification means with the information for fluid or fluids supplied in the inner volume of the container 20 from the fluid inlets. Such identification means can comprise any kind of recognition means such as, for example, mechanical codes, optical codes, RFID tags, bar codes, magnetic codes, detection holes or the like.

The identification means also comprise the information on process parameters to produce the food or beverage product. The process parameters are at least one or a combination of the following: temperature of the aqueous fluid injected, pressure of the gaseous fluid injected, total volume of gas and water injected, processing time, etc.

Preferably, as shown in the Figures attached, the pack 100 of the invention presents a plane shape oriented along a plane essentially vertically oriented during beverage production and the fluid inlet orientates the jet of aqueous and/or gaseous fluid in a direction comprised in said plane. The fluid jets introduced from the bottom into the container develop into circular and spiral movements creating turbulences, frictions and high contact surfaces between the fluid molecules and the ingredient particles. In average the fluid molecules have several turns within the container until they leave it together with the beverage or food product once mixed.

According to the invention, the container is arranged essentially vertically during the production and dispensing of the food or beverage product, and the insert 10 is arranged in such a way that the water and/or air coming through the fluid inlet or inlets is supplied into the container in an upward direction.

According to the present invention, the aqueous fluid, typically water, can be supplied into the container 20 at any temperature, cold, ambient or hot, depending on the type of food or beverage product targeted.

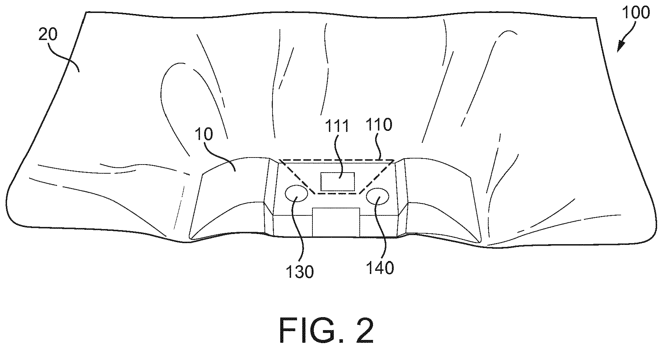

According to a preferred embodiment of the invention, typically a flexible sheet is folded so as to conform a pouch therefore configuring the container 20 comprising inside the ingredient or ingredients to prepare a food or beverage product out of it. According to another possible embodiment, as shown in Figure 2, this flexible sheet can be further overwrapped around the insert 10, therefore hygienically protecting and isolating it. The flexible film or sheet is arranged tightly sealing the insert 10 (therefore following the shape of the insert) except for certain parts of it, where a certain gap or clearance exists for different functionalities that will become apparent later.

A certain gap or clearance exists in the primary and secondary inlet areas 130 and 140 respectively, as shown in Figure 2. This gap allows to pierce and inject the fluid through corresponding primary and secondary inlets 12, 13 by the piercing and injecting means 200. Another gap or clearance is formed in a dispensing activation area 110, this area 110 comprising an obturable entry 111 which can be closed by external pressing means in the machine pressing the film (which is flexible) over this entry 111 which is in direct communication with the dispensing outlet 11, so that partial or complete closure of the dispensing outlet 11 is achieved. Another area where a gap or clearance can exist between the film or flexible sheet and the insert is an outlet delivery area 120, as represented in Figure 2. Cutting means (not shown) in the machine will be configured to cut the film over the outlet delivery area 120 in order to leave free the exit of the dispensing outlet 11 to allow dispensing of the food or beverage product, typically by gravity. Either a complete tearing and withdrawal of the film over the outlet delivery area 120 is done or a part of this film still remains attached to the rest of the film configuring the container so as to allow dispensing of the product without this film interfering in such dispensing. Different opening means are also possible.

The pressing means controlling the closing of the dispensing outlet 11 allow a to make a delayed dispensing, i.e. these pressing means can close by obturation the dispensing outlet 11 until a proper dissolution has been achieved for example inside the pack: once this happens, the pressing means withdraw totally or partially in order to allow a partial or total aperture of the dispensing outlet 11.

The primary and secondary inlet areas 130, 140 can either or both be used as centering elements with respect to the centering of the pack 100 with respect to the machine where a food or beverage product is prepared, which will be done through the corresponding piercing and injecting means 200.

Even if not represented in the Figures attached, one container 20 or a plurality of containers can be joined to an insert 10, this insert comprising for example one or more fluid inlets, such that for example there is a jet inlet per container creating a turbulence to dissolve the ingredient in each one of the containers.

The main advantage provided with a pack 100 configured according to the present invention is this: typically, the ingredient inside the container is a powder product that will be diluted and/or reconstituted with fluid in order to create an appropriate final product. By controlling when the opening of the dispensing outlet 11 is done (driven by the pressing means), it is avoided that powder is delivered in cup before it has been diluted and prepared into a proper food or beverage product, i.e. only when the dissolution has started and product is prepared, the pressing means withdraw (total or partially) and allow that the dispensing of the product starts.

Typically, a flexible water impermeable film or sheet is first folded in half (or two films or sheets are brought together) to configure the container 20 and can then overwrap and seal inside the insert 10 (in the embodiment where the insert is overwrapped with the film). Preferably, the food or beverage container 20 presents an essentially plane shape, wherein the insert 10 is arranged on one of the sides of the pack 100. Preferably the pack itself is substantially flexible and looks like a pouch or sachet. By flexible, it is meant that the sheets can be bent easily. The resulting pack 100 can be bent also, as being soft and can be deformed contrary to rigid containers. The flexible sheet material can be plastic laminates, metallised foil or alufoil or fibre base material or a mix of them, and it can be further coated. According to the invention the two flexible water impermeable sheets can be formed of one single flexible water impermeable sheet folded in half and joined at its free edges.

According to a second aspect, the invention refers to a *method for preparing a food or beverage product* using a pack 100 as previously described. The method comprises:
- inserting a pack 100 in a preparation machine;
- piercing one or more inlets in the insert 10 by piercing and injecting means 200, which also help centring the pack in the machine: these means will first pierce the film or flexible sheet covering the fluid inlets and will then start injecting fluid, typically water and/or air, preferably injecting water at pressure and then injecting intermittent pulses of air which help the dissolution;
- external pressing means in the machine close the dispensing outlet by exerting pressure over an obturable entry 111 in a dispensing activation area 110, and they are open totally or partially when dissolution of the ingredient inside the pack is prepared;
- cutting or piercing means in the machine cut the film over an outlet delivery area 120 in the pack so that the dispensing outlet 11 is opened to allow dispensing of the beverage or food product prepared.

The method of the invention allows to obtain a proper dissolution of the product inside the pack, and this is achieved by creating strong turbulences that will well mix and dissolve the product before it is delivered. Preferably, pressurized water will be injected into the container 20 from the beginning of the process from one or both of the primary and secondary inlet areas 130, 140. Preferably, as already described, defined pulses of air will be injected into the container as well at defined times, also through the primary and/or secondary inlet areas 130, 140, in order to help achieving the turbulence, hence the dissolution. These pulses of air will not last long, approximately from 1 to 5 seconds, more preferably from 1.5 to 3 seconds. At the end of the process, before the final stop of injection of pressurized water, a further pulse of air will also be injected in order to help proper emptying of the content of the pack, also helping speeding up the emptying of the pack at the end of the process. Depending on the type of product to be prepared in the pack, the injection of such pulses of air can be varied, in frequency and/or in length.

Thanks to the configuration of the insert 10 of the invention, it is possible to effect injection of water through the primary inlet area 130 for example, and injection of air at certain times through the secondary inlet area 140, for example. It is also possible to effect the injection of both, water and air at certain times, through only one inlet 130 or 140, through injection means 200 having a double channel and allowing this double injection. Any other possible configuration is possible according to the invention, as for example injecting water both through primary and secondary inlets 130 and 140, and injecting air at certain times through both or one of these inlets. Any configuration is possible, as the insert 10 is configured to allow a plurality of injections of different fluids.

Optimal turbulences help making a good dissolution, also improve foam creation and maintain under control the flow time of the product in cup.

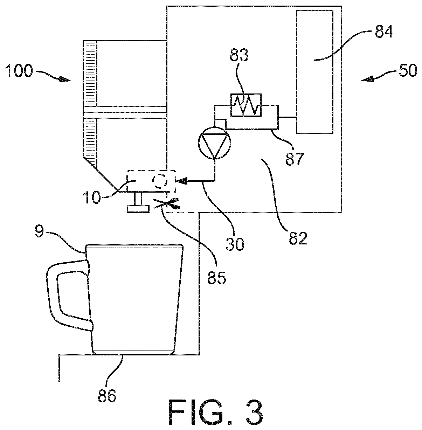

According to yet another aspect, *the invention refers to a preparation machine cooperating with a pack 100* as described previously. Figure 3 shows an exemplary preparation machine able to cooperate with a pack 100 according to the invention.

The machine 50 comprises receiving means adapted to accommodate the pack 100 preferably in such a way that the pack 100 is positioned vertically and the insert 10 is positioned at the bottom of the pack, and injecting means 200 (preferably also being piercing means, typically configured as a needle) designed for engaging with the insert 10 and for injecting water and/or air through the one or more fluid inlets 130 and/or 140. Typically, as the pack 100 is processed to obtain the beverage or food product in an essentially vertical position in the machine 50, the pack will be introduced either frontally in the machine 50 or laterally.

The machine 50 also comprises pressing means (not shown in Figure 3) configured to press the film (which is flexible) over the entry 111 which is in direct communication with the dispensing outlet 11, so that partial or complete closure of the dispensing outlet 11 is achieved, as previously described.

Furthermore, the machine 50 is provided with cutting or piercing means 85 to cut the film over an outlet delivery area 120 in the pack so that the dispensing outlet 11 is opened to allow dispensing of the beverage or food product prepared.

According to the invention and as schematically illustrated in Figure 3, a machine 50 for preparing food or beverage products from a pack 100 as described previously comprises at least:
- a fluid supply or tank 84 and a pump 82 for supplying pressurized aqueous fluid (water) to the fluid inlet or inlets in the insert 10;
- a heater 83 for eventually heating the aqueous fluid;
- a bypass line 87 for delivering aqueous fluid at ambient temperature;
- a valve (not illustrated) for the selection of either hot or ambient aqueous fluid;
- optionally, a cooling unit (not shown) can also be provided in the machine 50 for delivering cold aqueous fluid;
- injecting means 200, preferably piercing and injecting means, more preferably one or a plurality of fluid needles, piercing the fluid inlet or inlets and injecting the pressurized aqueous fluid coming from the fluid supply and the gaseous fluid (air);
- pressing means configured to press the film over the entry 111 which is in direct communication with the dispensing outlet 11, so that partial or complete closure of the dispensing outlet 11 is achieved;
- cutting or piercing means for cutting the film over an outlet delivery area 120 in the pack so that the dispensing outlet 11 is opened.

The machine 50 also comprises a data reader, preferably comprising an optical device, which reads and retrieves the information from the identification means in the pack 100. When the identification means comprise for example detection holes, the data reader will retrieve the information from the identification means by a light emitter device emitting light passing through these punched holes.

Preferably the machine further comprises a positioning area 86 for allocating a drinking cup 9 under the dispensing outlet of the pack when a food product or a beverage is prepared from a pack 100.

Further aspects of the invention relate to *a system comprising a pack 100 and* a *machine 50* cooperating in order to produce a food or beverage product and to *the use* of *a pack 100 in the preparation of a food or beverage product,* particularly using such a machine 50.

Although the present invention has been described with reference to preferred embodiments thereof, many modifications and alternations may be made by a person having ordinary skill in the art without departing from the scope of this invention which is defined by the appended claims.

## Claims

1. Pack (100) for preparing a food or beverage product from one or more ingredients, the pack comprising an insert (10) and a container (20);
the container (20) being configured by at least one flexible sheet folded in such a way to configure a container where one or more ingredients can be stored;
the insert (10) comprising a dispensing outlet (11) through where the food or beverage product is delivered and an obturable entry (111) which is in direct communication with the dispensing outlet (11), whereby the obturable entry (111) can be closed by external pressing means in a machine pressing the at least one flexible sheet over this entry (111), so that partial or complete closure of the dispensing outlet (11) is achieved,
the insert (10) further comprising a primary inlet (12) and optionally also a secondary inlet (13) through where water and air can be introduced inside the volume of the container (20).

2. Pack (100) according to claim 1 comprising at least primary and secondary inlet areas (130, 140) piercable to access corresponding primary and secondary inlets (12, 13).

3. Pack (100) according to claim 2 wherein the primary and secondary inlets (12, 13) communicate with the inner volume of the container (20) by respective primary and secondary jet inlets (14, 15), preferably arranged at about 90° with respect to the primary and secondary inlets (12, 13).

4. Pack (100) according to any of claims 2-3 wherein primary and secondary inlets (12, 13) are reversibly arranged in the pack (100) so that they can be accessed frontally or through their opposed rear parts.

5. Pack (100) according to any of claims 2-4 wherein the primary and secondary inlet areas (130, 140) are arranged symmetrically with respect to a central vertical axis dividing the pack (100) in two identical parts.

6. Pack (100) according to any of claims 3-5 wherein the primary and secondary inlet areas (130, 140) are arranged in the insert (10) asymmetrically, so that optimal turbulences are created inside the container (20).

7. Pack (100) according to any of the previous claims wherein the at least one flexible sheet is arranged overwrapping the insert (10) in its entirety except for the part of the insert (10) in direct communication with the inner volume of the container (20).

8. Pack (100) according to any of the previous claims further comprising an outlet delivery area (120) wrapped with flexible sheet which can be cut in order to give access to the dispensing outlet (11).

9. Pack (100) according to any of the previous claims configured as a capsule, as a sachet, as a pouch or the like.

10. Pack (100) according to any of the previous claims further comprising identification means comprising information on process parameters to produce the food or beverage product, the process parameters being at least one or a combination of the following: temperature of the aqueous fluid injected, pressure of the gaseous fluid injected, total volume of gas and water injected, processing time, etc.

11. Preparation machine (50) cooperating with a pack (100) according to any of the previous claims to prepare a food or beverage product, the machine comprising pressing means for pressing the at least one flexible sheet over the obturable entry (111) in the pack in order to allow complete or partial closure of a dispensing outlet (11) through which the product is delivered

12. Preparation machine (50) according to claim 11, further comprising piercing and injecting means (200) configured to pierce and inject a fluid through the primary and secondary inlet areas (130, 140) either simultaneously or discontinuously.

13. Preparation machine (50) according to claim 12 wherein the injecting means (200) comprise different fluid channels able to inject simultaneously or discontinuously an aqueous and/or a gaseous fluid.

14. Preparation machine (50) according to claim 13 wherein the fluid channels are managed independently regarding pressure and/or temperature and/or fluid flow.

15. Preparation machine (50) according to any of claims 11-14 further comprising cutting means configured to open an area in the pack giving access to a dispensing outlet (11) through which the product is delivered.

16. System for preparing a food or beverage product comprising a pack (100) according to any of claims 1-10 and a preparation machine (50) according to any of claims 11-15.

17. Use of a pack (100) according to any of claims 1-10 for preparing a food or beverage product.

18. Method for preparing a food or beverage product from one or more ingredients comprised in a pack according to any of claims 1-10, the method comprising:
- injecting an aqueous fluid at a certain pressure into the inner volume of the pack;
- injecting at certain pulses of time a gaseous fluid simultaneously with the aqueous fluid;
- controlling the aperture of a dispensing outlet in the pack by pressing means to allow dispensing of the product prepared, the pressing means pressing the at least one flexible sheet over the obturable entry (111) in the pack, so that partial or complete closure of the dispensing outlet (11) is achieved.

19. Method according to claim 18 wherein the injection pressure of the aqueous fluid and of the gaseous fluid are different.

20. Method according to any of claims 18-19 wherein the pressure and/or temperature and/or flow of the aqueous and gaseous fluid injection depend on the type of ingredient or ingredients in the pack.

## Patentansprüche

1. Packung (100) zum Zubereiten eines Nahrungsmittel- oder Getränkeprodukts aus einem oder mehreren Bestandteilen, wobei die Packung einen Einsatz (10) und einen Behälter (20) umfasst;
wobei der Behälter (20) durch mindestens eine flexible Lage konfiguriert ist, die so gefaltet ist, dass sie einen Behälter konfiguriert, in dem ein oder mehrere Bestandteile aufbewahrt werden können;
wobei der Einsatz (10) einen Ausgabeauslass (11) umfasst, durch den das Nahrungsmittel- oder Getränkeprodukt abgegeben wird, und einen verschließbaren Einlass (111), der in direkter Verbindung mit dem Ausgabeauslass (11) steht, wobei der verschließbare Einlass (111) durch externe Pressmittel in einer Maschine geschlossen werden kann, die mindestens eine flexible Lage über diesen Einlass (111) pressen, sodass ein teilweises oder vollständiges Schließen des Ausgabeauslasses (11) erreicht wird,
wobei der Einsatz (10) ferner einen primären Einlass (12) und wahlweise auch einen sekundären Einlass (13) umfasst, durch die Wasser und Luft in das Volumen des Behälters (20) eingeführt werden kann.

2. Packung (100) nach Anspruch 1, umfassend mindestens einen primären und einen sekundären Einlassbereich (130, 140), die durchstechbar sind, um auf einen entsprechenden primären und sekundären Einlass (12, 13) zuzugreifen.

3. Packung (100) nach Anspruch 2, wobei der primäre und der sekundäre Einlass (12, 13) mit dem inneren Volumen des Behälters (20) durch den jeweiligen primären und sekundären Strahleinlass (14, 15) in Verbindung stehen, die vorzugsweise bei etwa 90° in Bezug auf den primären und den sekundären Einlass (12, 13) angeordnet sind.

4. Packung (100) nach einem der Ansprüche 2-3, wobei der primäre und der sekundäre Einlass (12, 13) in der Packung (100) umkehrbar angeordnet sind, sodass auf sie von vorne oder durch ihre gegenüberliegenden hinteren Teile zugegriffen werden kann.

5. Packung (100) nach einem der Ansprüche 2-4, wobei der primäre und der sekundäre Einlassbereich (130, 140) in Bezug auf eine zentrale vertikale Achse symmetrisch angeordnet sind, welche die Packung (100) in zwei identische Teile aufteilt.

6. Packung (100) nach einem der Ansprüche 3-5, wobei der primäre und der sekundäre Einlassbereich (130, 140) in dem Einsatz (10) asymmetrisch angeordnet sind, sodass optimale Turbulenzen in dem Behälter (20) erzeugt werden.

7. Packung (100) nach einem der vorstehenden Ansprüche, wobei die mindestens eine flexible Lage den Einsatz (10) in seiner Gesamtheit mit Ausnahme des Teils des Einsatzes (10), der in direkter Verbindung mit dem Innenvolumen des Behälters (20) steht, umhüllend angeordnet ist.

8. Packung (100) nach einem der vorstehenden Ansprüche, ferner umfassend einen Auslassabgabebereich (120), der in eine flexiblen Lage gehüllt ist, die geschnitten werden kann, um Zugriff auf den Ausgabeauslass (11) zu gewähren.

9. Packung (100) nach einem der vorstehenden Ansprüche, die als eine Kapsel, als ein Beutel, als ein Tütchen oder dergleichen konfiguriert ist.

10. Packung (100) nach einem der vorstehenden Ansprüche, ferner umfassend Identifikationsmittel, umfassend Informationen über Verfahrensparameter, um das Nahrungsmittel- oder Getränkeprodukt herzustellen, wobei die Verfahrensparameter mindestens einer oder eine Kombination der Folgenden sind: Temperatur des eingespritzten wässrigen Fluids, Druck des eingespritzten gasförmigen Fluids, Gesamtvolumen von eingespritztem Gas und Wasser, Verarbeitungszeit usw.

11. Zubereitungsmaschine (50), die mit einer Packung (100) nach einem der vorstehenden Ansprüche zusammenwirkt, um ein Nahrungsmittel- oder Getränkeprodukt zuzubereiten, wobei die Maschine Pressmittel zum Pressen der mindestens einen flexiblen Lage über den verschließbaren Einlass (111) in der Packung umfasst, um ein vollständiges oder teilweises Schließen eines Ausgabeauslasses (11) zu ermöglichen, durch den das Produkt abgegeben wird.

12. Zubereitungsmaschine (50) nach Anspruch 11, ferner umfassend Durchstech- und Einspritzmittel (200), die dazu konfiguriert sind, entweder gleichzeitig oder diskontinuierlich ein Fluid durch den primären und den sekundären Einlassbereich (130, 140) zu stechen und einzuspritzen.

13. Zubereitungsmaschine (50) nach Anspruch 12, wobei die Einspritzmittel (200) unterschiedliche Fluidkanäle umfasst, die in der Lage sind, gleichzeitig oder diskontinuierlich ein wässriges und/oder ein gasförmiges Fluid einzuspritzen.

14. Zubereitungsmaschine (50) nach Anspruch 13, wobei die Fluidkanäle unabhängig bezüglich Druck und/oder Temperatur und/oder Fluidstrom verwaltet werden.

15. Zubereitungsmaschine (50) nach einem der Ansprüche 11-14, ferner umfassend Schneidemittel, die dazu konfiguriert sind, einen Bereich in der Packung zu öffnen, der Zugriff auf einen Ausgabeauslass (11) gewährt, durch den das Produkt abgegeben wird.

16. System zum Zubereiten eines Nahrungsmittel- oder Getränkeprodukts, umfassend eine Packung (100) nach einem der Ansprüche 1 bis 10 und eine Zubereitungsmaschine (50) nach einem der Ansprüche 11-15.

17. Verwendung einer Packung (100) nach einem der Ansprüche 1-10 zum Zubereiten eines Nahrungsmittel- oder Getränkeprodukts.

18. Verfahren zum Zubereiten eines Nahrungsmittel- oder Getränkeprodukts aus einem oder mehreren Bestandteilen, die in einer Packung gemäß einem der Ansprüche 1-10 enthalten sind, wobei das Verfahren Folgendes umfasst:
- Einspritzen eines wässrigen Fluids bei einem bestimmten Druck in das Innenvolumen der Packung;
- Einspritzen eines gasförmigen Fluids gleichzeitig mit dem wässrigen Fluid in gewissen Zeitimpulsen;
- Steuern des Öffnens eines Ausgabeauslasses in der Packung durch Pressmittel, um das Abgeben des zubereiteten Produkts zu ermöglichen, wobei die Pressmittel die mindestens eine flexible Lage über den verschließbaren Einlass (111) in der Packung pressen, sodass ein teilweises oder vollständiges Schließen des Abgabeauslasses (11) erreicht wird.

19. Verfahren nach Anspruch 18, wobei der Einspritzdruck des wässrigen Fluids und des gasförmigen Fluids unterschiedlich sind.

20. Verfahren nach einem der Ansprüche 18-19, wobei der Druck und/oder die Temperatur und/oder der Strom der wässrigen und der gasförmigen Fluideinspritzung von der Art des Bestandteils oder den Bestandteilen in der Packung abhängt.

## Revendications

1. Emballage (100) pour préparer un produit alimentaire ou de boisson à partir d'un ou plusieurs ingrédients, l'emballage comprenant un insert (10) et un récipient (20) ;
le récipient (20) étant configuré par au moins une feuille flexible pliée de manière à configurer un récipient où un ou plusieurs ingrédients peuvent être stockés ;
l'insert (10) comprenant une sortie de distribution (11) à travers laquelle le produit alimentaire ou de boisson est distribué et une entrée (111) obturable qui est en communication directe avec la sortie de distribution (11), de telle manière que l'entrée (111) obturable peut être fermée par un moyen de pression externe dans une machine pressant l'au moins une feuille flexible sur cette entrée (111), de sorte que la fermeture partielle ou complète de la sortie de distribution (11) soit obtenue,
l'insert (10) comprenant en outre une entrée principale (12) et facultativement également une entrée secondaire (13) à travers laquelle l'eau et l'air peuvent être introduits dans le volume du récipient (20).

2. Emballage (100) selon la revendication 1, comprenant au moins des zones d'entrée primaire et secondaire (130, 140) pouvant être percées pour accéder aux entrées primaire et secondaire (12, 13) correspondantes.

3. Emballage (100) selon la revendication 2, dans lequel les entrées primaire et secondaire (12, 13) communiquent avec le volume interne du récipient (20) par des entrées de jet primaire et secondaire respectives (14, 15), de préférence agencées à environ 90 ° par rapport aux entrées primaire et secondaire (12, 13).

4. Emballage (100) selon l'une quelconque des revendications 2 à 3, dans lequel des entrées primaire et secondaire (12, 13) sont disposées de manière réversible dans l'emballage (100) de sorte qu'elles puissent être accédées de manière frontale ou par leurs parties arrière opposées.

5. Emballage (100) selon l'une quelconque des revendications 2 à 4, dans lequel les zones d'entrée primaire et secondaire (130, 140) sont agencées symétriquement par rapport à un axe vertical central divisant l'emballage (100) en deux parties identiques.

6. Emballage (100) selon l'une quelconque des revendications 3 à 5, dans lequel les zones d'entrée primaire et secondaire (130, 140) sont agencées dans l'insert (10) de manière asymétrique, de sorte que des turbulences optimales soient créées à l'intérieur du récipient (20).

7. Emballage (100) selon l'une quelconque des revendications précédentes, dans lequel la au moins une feuille flexible est agencée de manière à recouvrir l'insert (10) dans sa totalité à l'exception de la partie de l'insert (10) en communication directe avec le volume interne du récipient (20).

8. Emballage (100) selon l'une quelconque des revendications précédentes, comprenant en outre une zone de distribution de sortie (120) enroulée avec une feuille flexible qui peut être découpée afin de donner accès à la sortie de distribution (11).

9. Emballage (100) selon l'une quelconque des revendications précédentes configuré sous la forme d'une capsule, d'un sachet, d'une poche ou analogue.

10. Emballage (100) selon l'une quelconque des revendications précédentes, comprenant en outre des moyens d'identification comprenant des informations sur des paramètres de processus pour produire le produit alimentaire ou de boisson, les paramètres de traitement étant au moins un élément ou une combinaison des éléments suivants : température du fluide aqueux injecté, pression du fluide gazeux injecté, volume total de gaz et eau injecté, temps de traitement et autres.

11. Machine de préparation (50) coopérant avec un emballage (100) selon l'une quelconque des revendications précédentes pour préparer un produit alimentaire ou de boisson, la machine comprenant des moyens de pressage pour presser la au moins une feuille flexible sur l'entrée (111) obturable dans l'emballage afin de permettre la fermeture complète ou partielle d'une sortie de distribution (11) à travers laquelle le produit est distribué.

12. Machine de préparation (50) selon la revendication 11, comprenant en outre des moyens de perçage et d'injection (200) configurés pour percer et injecter un fluide à travers les zones d'entrée primaire et secondaire (130, 140) soit simultanément, soit de manière discontinue.

13. Machine de préparation (50) selon la revendication 12 dans laquelle les moyens d'injection (200) comprennent des canaux de fluide différents aptes à injecter simultanément ou de façon discontinue un fluide aqueux et/ou gazeux.

14. Machine de préparation (50) selon la revendication 13 dans laquelle les canaux de fluide sont gérés indépendamment concernant la pression et/ou la température et/ou l'écoulement de fluide.

15. Machine de préparation (50) selon l'une quelconque des revendications 11 à 14, comprenant en outre des moyens de coupe configurés pour ouvrir une zone dans l'emballage donnant accès à une sortie de distribution (11) à travers laquelle le produit est distribué.

16. Système de préparation d'un produit alimentaire ou de boisson comprenant un emballage (100) selon l'une quelconque des revendications 1 à 10 et une machine de préparation (50) selon l'une quelconque des revendications 11 à 15.

17. Utilisation d'un emballage (100) selon l'une quelconque des revendications 1 à 10 pour la préparation d'un produit alimentaire ou de boisson.

18. Procédé de préparation d'un produit alimentaire ou de boisson à partir d'un ou plusieurs ingrédients compris dans un emballage selon l'une quelconque des revendications 1 à 10, le procédé comprenant :
- l'injection d'un fluide aqueux à une certaine pression dans le volume interne de l'emballage ;
- l'injection à certaines impulsions de temps d'un fluide gazeux simultanément avec le fluide aqueux ;
- la commande de l'ouverture d'une sortie de distribution dans l'emballage par des moyens de pression pour permettre la distribution du produit préparé, les moyens de pression pressant la au moins une feuille flexible sur l'entrée (111) obturable de l'emballage, de sorte que la fermeture partielle ou complète de la sortie de distribution (11) soit obtenue.

19. Procédé selon la revendication 18, dans lequel la pression d'injection du fluide aqueux et du fluide gazeux sont différentes.

20. Procédé selon l'une quelconque des revendications 18 à 19, dans lequel la pression et/ou la température et/ou l'écoulement de l'injection de fluide aqueux et gazeux dépendent du type du ou des ingrédients dans l'emballage.
